# EUROPEAN PATENT SPECIFICATION

(11) **EP 2 737 093 B1**
(45) Date of publication and mention of the grant of the patent: **22.06.2022**
(21) Application number: 12817056.0
(22) Date of filing: 25.07.2012
(51) Int. Cl.: C21D 9/46

(54) **PRODUCT AND PROCESS BY LOCALIZED HEAT TREATMENT OF SHEET STEEL**
PRODUKT UND VERFAHREN DURCH LOKALISIERTE WÄRMEBEHANDLUNG VON STAHLBLECH
PRODUIT ET PROCÉDÉ IMPLIQUANT UN TRAITEMENT THERMIQUE LOCALISÉ D'UNE TÔLE D'ACIER

(30) Priority: 25.07.2011 US 201161511283 P
(43) Date of publication of application: 04.06.2014
(73) Proprietor: Magna International Inc., Aurora, ON L4G 7K1 (CA)
(72) Inventor: AMTMANN, Maximilian, Brampton, Ontario L6T 5R3 (CA); SHULKIN, Boris, West Bloomfield, Michigan 48322 (US); VAN GELDER, Aldo, Newmarket, Ontario L3X 2H4 (CA); GU, Hongping, Newmarket, Ontario L3X0A1 (CA)
(74) Representative: Glawe, Delfs, Moll
(86) International application number: PCT/CA2012/000700
(87) International publication number: WO 2013/013305

(56) References cited:
- EP-A1- 1 842 617
- EP-A1- 2 561 946
- DE-A1-102008 020 794
- FR-A1- 2 825 375
- JP-A- S5 980 728
- JP-A- 60 238 424
- JP-A- 60 245 730
- SU-A1- 630 298
- US-B2- 6 767 417

## Description

### FIELD OF THE INVENTION

The invention relates generally to sheet metal components with tailored tempered properties, and more particularly to a process for the localized strength enhancement of sheet metal components based on laser-beam heat treatment, a system for performing the process, and products produced therewith.

### BACKGROUND OF THE INVENTION

In the field of vehicle construction, more and more vehicle parts made of high-strength and ultra-high-strength steel are being employed in order to satisfy criteria for lightweight construction. This applies to car body construction where, in order to meet weight goals and safety requirements, for instance structural and/or safety elements such as door intrusion beams, A and B columns, bumpers, side rails and cross rails are increasingly being produced from UHSS (Ultra High Strength Steel), and thermo-shaped and press-hardened steel having tensile strengths greater than 1000 MPa.

In different applications of motor vehicle engineering, shaped parts are to have high strength in certain regions while in other regions they are to have higher ductility relative thereto. "Tailoring" the properties of shaped parts in this way facilitates subsequent forming operations, such as for instance trimming or perforating the part, and results in regions that can convert crash energy into deformation by crumpling. One common approach includes heating a sheet metal blank to above its austenitization temperature, such as for instance in a furnace, and then quickly transferring the heated blank to a cooled press and forming the blank into the desired shape. Heating or thermally insulating inserts within the forming surfaces of the press are used to control the cooling rate of selected portions of the sheet metal blank during the forming and cooling steps, such that the selected portions attain lower tensile strength and/or lower hardness. This approach is suitable for forming localized areas with reduced tensile strength and/or reduced hardness within a component having otherwise high tensile strength and/or high hardness. Unfortunately, this approach has a high energy cost associated with heating the entire part to its austenitization temperature, and causes significant wear to the forming tool. This approach is not well suited for producing parts having relatively small areas of high strength and/or hardness. Additionally, the maximum production rate is limited due to the need to cool the forming tool between parts.

Jahn et al. (Physics Procedia 12 (2011) 431-441) describe a process for the local strengthening of steel sheets for load adapted component design in car body structures. In order to strengthen the steel sheets, Jahn et al. used a process of laser remelting followed by an intrinsic self-quenching to yield selective material strengthening effects. This remelting area is a narrow weld bead and the surrounding material can act as the bulk material to absorb the heat from the weld bead. Resolidification following remelting produces a material with a fine microstructure, which has a higher strength relative to the original material. Other laser hardening processes of bulk material are known in the prior art, which also rely on self-quenching to achieve a desired phase transformation. The self-quenching effect is provided through the bulk material adjacent to the heated material, as already described with reference to the teaching of Jahn et al. Unfortunately, these approaches require a sufficient amount of bulk material to produce the self-quenching effect, and therefore tend to be unsuitable for use with components that are fabricated using thin steel sheets.

It would therefore be beneficial to provide a method and system that overcome at least some of the above-mentioned limitations and disadvantages of the prior art.

EP 1 842 617 A1 discloses a heat tretament process for the partial hardening of sheet metal or semi-finished products made of steel or a steel alloy, in which a laser beam is used for partial hardening and protective gas treatment with a protective gas or a protective gas mixture takes place. Quenching of the partially heated region of the sheet or semi-finished product below the martensite finish temperature, preferably below room temperature, is achieved via the protective gas treatment.

### Summary of the invention

**According to an aspect of at least one embodiment** of the **instant invention,** there is provided a process for the localized heat treatment of a steel sheet component with the features of claim 1 and a system for performing localized heat treatment of a steel sheet component with the features of claim 9.

According to an aspect of at least one embodiment of the instant invention, there is provided a system for performing localized heat treatment of a steel sheet component formed of a hardenable ferrous alloy, comprising: a support structure for holding the steel sheet component during the localized heat treatment thereof; a laser source for generating a laser beam, the laser source being movable relative to the support structure for scanning the generated laser beam across a predetermined portion of the steel sheet component, the laser source having an output power that is sufficient to form a heating spot capable of heating material within the predetermined portion to a temperature of austenitizing transformation; and a source of external cooling arranged for, during use, cooling material within the predetermined portion and immediately behind the heating spot produced by the laser beam along a scan direction of the laser beam.

### BRIEF DESCRIPTION OF THE DRAWINGS

The instant invention will now be described by way of example only, and with reference to the attached drawings, wherein similar reference numerals denote similar elements throughout the several views, and in which:
Figure 1 is a simplified perspective view showing a portion of a steel sheet component having a strip of laser beam heat-treated material, according to an embodiment of the invention.
Figure 2 is a simplified perspective view showing a system for performing localized heat treatment of steel sheet components, according to an embodiment of the invention.
Figure 3 is a simplified perspective view showing another system for performing localized heat treatment of steel sheet components, according to an embodiment of the invention.
Figure 4 is a simplified perspective view showing yet another system for performing localized heat treatment of steel sheet components, according to an embodiment of the invention.
Figure 5 is a simplified side view showing yet another system for performing localized heat treatment of steel sheet components, according to an embodiment of the invention.
Figure 6 shows a graphic representation of the temperature that is measured using a pyrometer, at a fixed location within a laser beam scan path during localized heat-treatment of steel sheet components, for different cooling mechanisms.
Figure 7 shows a graphic representation of the strength enhancement in steel sheet components subsequent to localized heat-treatment.
Figure 8 shows an exemplary representation illustrating a part with laser beam heat-treated strips for increasing the strength of the part.
Figure 9 shows a schematic representation of a vortex tube using compressed air for generating a cold air stream for beam-spot cooling.
Figure 10 shows a schematic representation of an automotive frame including components with localized heat treatment.

### DETAILED DESCRIPTION OF EMBODIMENTS OF THE INVENTION

The following description is presented to enable a person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the scope of the invention. Thus, the present invention is not intended to be limited to the embodiments disclosed, but is to be accorded the widest scope consistent with the principles and features disclosed herein.

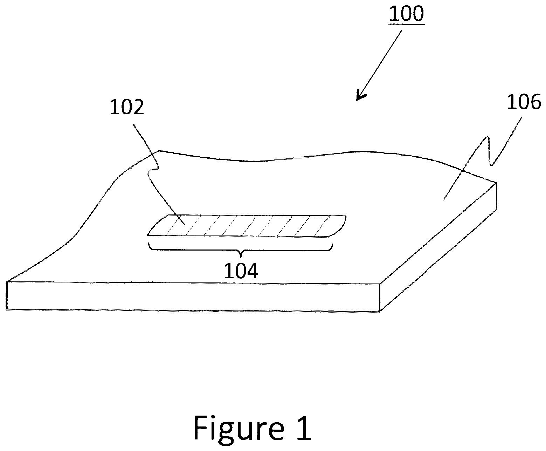

Figure 1 is a simplified perspective view showing a portion of a steel sheet component 100 having a strip of laser-beam heat-treated material 102, which is formed within a predetermined portion 104 of said steel sheet component 100. For instance, the steel sheet component 100 is stamped from a sheet 106 of hardenable steel, such as Usibor^{®} 1500P, Usibor^{®} 1500 or another suitable steel, etc. By way of a specific and non-limiting example, the component 100 is an automotive structural or safety element, such as one of a door intrusion beam, an A column, a B column, a bumper, a side rail or a cross rail, etc.

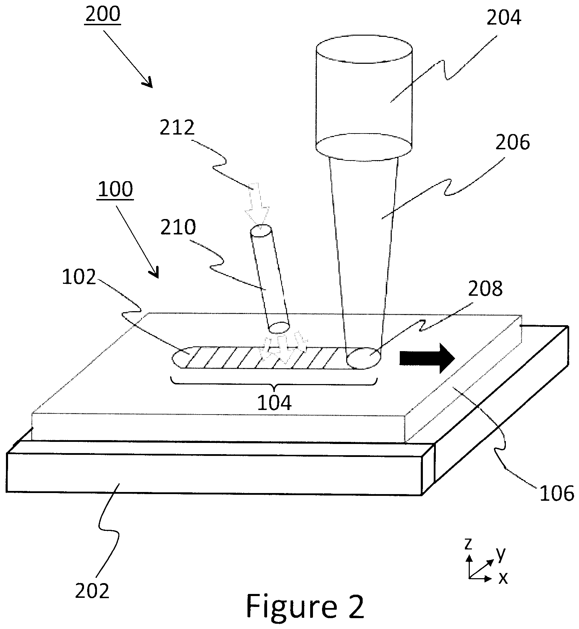

Referring now to Figure 2, shown is a simplified perspective view illustrating various components of a system 200 for performing localized heat treatment of a steel sheet component 100, according to an embodiment of the invention. For clarity, components of the system 200 that are not essential to achieving an understanding of the invention have been omitted from this discussion. Accordingly, components such as for instance laser beam generation units, laser delivery optics, drive mechanisms and flow-control systems for cooling fluids etc. are not shown in Figure 2. Further, in the interest of clarity the steel sheet component 100 is illustrated as a flat, rectangular sheet 106. It is to be understood that in practice the steel sheet component 100 may have a complex, three-dimensional shape. For instance, the steel sheet component 100 may be a B-column for an automobile, etc.

Referring still to Figure 2, the system 200 includes a support structure 202 for holding the steel sheet component 100 during localized heat treatment thereof. A laser beam shaping optic 204 is represented as a laser beam source for providing a laser beam 206 and for projecting the laser beam 206 onto the predetermined portion 104 of the steel sheet component 100, thereby producing heating spot 208. In the specific example that is shown in Figure 2 the laser beam 206 is circular in cross-section and produces a circular heating spot 208. The support structure 202 is relatively moveable to the laser beam source 204 for scanning the laser beam 206 across the predetermined portion 104 of the steel sheet component 100. In particular, the laser beam 206 is scanned along a scan direction as indicated using the block arrow in Figure 2, such that the heating spot 208 heats the material within the predetermined portion 104 of the steel sheet component 100. Optionally, the laser beam 206 is stationary and the support structure 202 is moved in a direction opposite the scan direction, or the support structure 202 is stationary and the laser beam 206 is moved in the scan direction. Alternatively, both the laser beam 206 and the support structure 202 are moved. In an embodiment, the laser beam 206 is movable in one of the x-direction and the y-direction, and the support structure 202 is movable in the other one of the x-direction and the y-direction, thereby supporting the formation of curved-strips or other shapes of laser-beam heat-treated material. Alternatively, the laser beam 206 or the support structure is movable in the x-direction and in the y-direction.

During operation, the heating spot 208 heats the material within the predetermined portion 104 to a temperature of austenitizing transformation. For instance, the material within the predetermined portion 104 is heated to between about 800°C and about 950°C. The material of the steel sheet component 100, both within and adjacent to the predetermined portion 104, is insufficiently thick to support self-quenching of the laser-beam heated material. That is to say, the rate of cooling of the material after the heating spot 208 heats it is not sufficiently fast to transform a mainly austenitic microstructure of the material to a mainly bainitic and/or martensitic microstructure. Accordingly, the system 200 includes a source of external cooling 210. In the example that is shown in Figure 2, the source of external cooling 210 comprises a conduit for directing a flow 212 of a cooling fluid toward the material within the predetermined portion 104 and immediately behind the laser beam 206 along the scan direction of the laser beam 206. The source of external cooling 210 provides the flow 212 of the cooling fluid during scanning of the laser beam 206 across the predetermined portion 102. That is to say, the cooling fluid is directed toward a point that trails the heating spot 208.

The source of external cooling 210 is selected and adjusted to cool the material at a sufficiently rapid rate to form a locally hardened and/or strengthened region substantially within the predetermined portion 104. In particular, the source of external cooling 210 is selected to cool the material at a rate that is sufficiently fast to transform a mainly austenitic microstructure of the material to a mainly bainitic and/or martensitic microstructure. Cooling the material in this way achieves predetermined mechanical properties, such as high strength and tough microstructure. Options for adjusting the source of external cooling 210 include, for instance, varying the distance between the heating spot 208 and the source of external cooling 210. Said distance may be determined in order to achieve optimal cooling behavior. Alternatively, the cooling fluid itself is selected to achieve optimal cooling behavior for a particular application. According to an embodiment, the cooling fluid is cold air. Optionally, other gaseous or liquid cooling media are used as the cooling fluid. For instance, dry ice (CO₂) and water mist are two alternate cooling fluids. Further, the cooling rate that is achieved using the source of external cooling 210 depends upon the flow rate and/or flow volume of the cooling fluid, the interacting time of the cooling fluid with the heated material, and the temperature of the cooling fluid. As discussed in some of the examples below, the interacting time of the cooling fluid may be increased by employing multiple conduits for providing the cooling fluid, and by properly arranging the spacing between the conduits.

Referring still to Figure 2, the source of external cooling 210 is shown disposed along the same side of the sheet metal component 100 as the laser beam source 204, that is to say, along the heating side of the sheet metal component 100. Alternatively, the source of external cooling 210 is disposed for directing a flow of the cooling fluid toward the material along the side of the sheet metal component 100 that is opposite the heating side. Further alternatively, separate flows of cooling fluid are directed toward the heating side and toward the reverse side of the sheet metal component 100.

Optionally, the laser-beam heat-treatment process is performed on a single sheet metal part, on a sub-assembly of parts, or on a complete assembly of parts. Advantageously, the laser beam 206 can be directed toward any predetermined location of a part or sub-assembly to create a local strengthening, even at locations that otherwise are difficult to access.

Although the example that is shown in Figure 2 illustrates a flat sheet metal component 100, it is to be understood that the process is equally applicable to tubular or other closed-profile structures, in particular hydroformed tubular parts. Analogously as described heretofore, laser beam 206 is used to provide local heating to a predetermined area of the tubular part within which the mechanical properties are to be improved, followed by rapid cooling/quenching of the heated area to cause a phase transformation from a mainly austenitic microstructure to a mainly martensitic and/or bainitic microstructure.

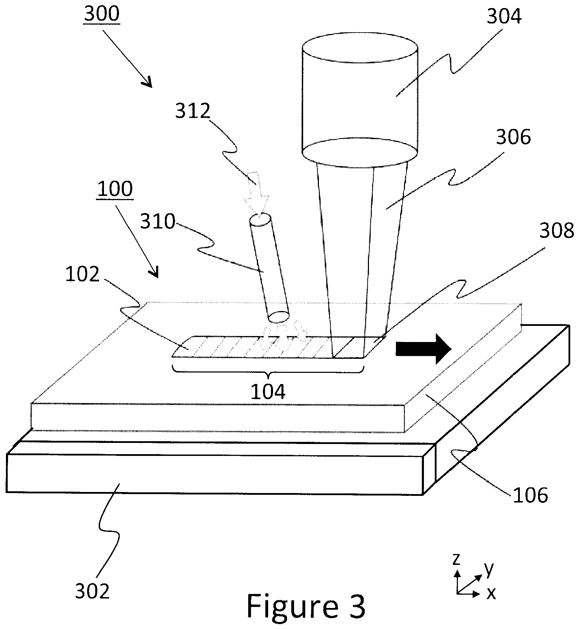

Referring now to Figure 3, shown is a simplified perspective view illustrating another system 300 for performing localized heat treatment of a steel sheet component 100, according to an embodiment of the instant invention. For clarity, components of the system 300 that are not essential to achieving an understanding of the invention have been omitted from this discussion. Accordingly, components such as for instance laser beam generation units, laser delivery optics, drive mechanisms and flow-control systems for cooling fluids etc. are not shown in Figure 3. Further, in the interest of clarity the steel sheet component 100 is illustrated as a flat, rectangular sheet 106. It is to be understood that in practice the steel sheet component 100 may have a complex, three-dimensional shape. For instance, the steel sheet component 100 may be a B-column for an automobile, etc.

Referring still to Figure 3, the system 300 includes a support structure 302 for holding the steel sheet component 100 during localized heat treatment thereof. A laser beam shaping optic 304 is used to represent a laser beam source for providing a laser beam 306 and for projecting the laser beam 306 onto the predetermined portion 104 of the steel sheet component 100, thereby producing heating spot 308. In the specific example that is shown in Figure 3 the laser beam 306 is square in cross-section and produces a square heating spot 308. The support structure 302 is relatively moveable to the laser beam source 304 for scanning the laser beam 306 across the predetermined portion 104 of the steel sheet component 100. In particular, the laser beam 306 is scanned along a scan direction as indicated using the block arrow in Figure 3, such that the heating spot 308 heats the material within the predetermined portion 104 of the steel sheet component 100. Optionally, the laser beam 306 is stationary and the support structure 302 is moved in a direction opposite the scan direction, or the support structure 302 is stationary and the laser beam 306 is moved in the scan direction. Alternatively, both the laser beam 306 and the support structure 302 are moved. In an embodiment, the laser beam 306 is movable in one of the x-direction and the y-direction, and the support structure 302 is movable in the other one of the x-direction and the y-direction, thereby supporting the formation of curved-strips or other shapes of laser-beam heat-treated material. Alternatively, the laser beam 306 or the support structure 302 is movable in the x-direction and in the y-direction.

During operation, the heating spot 308 heats the material within the predetermined portion 104 to a temperature of austenitizing transformation. For instance, the material within the predetermined portion 104 is heated to between about 800°C and about 950°C. The material of the steel sheet component 100, both within and adjacent to the predetermined portion 104, is insufficiently thick to support self-quenching of the laser-beam heated material. That is to say, the rate of cooling of the material after the heating spot 308 heats it is not sufficiently fast to transform a mainly austenitic microstructure of the material to a mainly bainitic and/or martensitic microstructure. Accordingly, the system 300 includes a source of external cooling 310. In the example that is shown in Figure 3, the source of external cooling 310 is a conduit for directing a flow 312 of a cooling fluid toward the material within the predetermined portion 104 and immediately behind the laser beam 306 along the scan direction of the laser beam 306. The source of external cooling 310 provides the flow 312 of the cooling fluid during scanning of the laser beam 306 across the predetermined portion 102. That is to say, the cooling fluid is directed toward a point that trails the heating spot 308.

The source of external cooling 310 is selected and adjusted to cool the material at a sufficiently rapid rate to form a locally hardened region substantially within the predetermined portion 104. In particular, the source of external cooling 310 is selected to cool the material at a rate that is sufficiently fast to transform a mainly austenitic microstructure of the material to a mainly bainitic and/or martensitic microstructure. Cooling the material in this way achieves predetermined mechanical properties, such as high strength and tough microstructure. Adjusting the source of external cooling 310 includes, for instance, varying the distance between the heating spot 308 and the area toward which the cooling fluid is directed. Said distance may be determined to achieve optimal cooling behavior. Alternatively, the cooling fluid itself is selected to achieve optimal cooling behavior for a particular application. According to an embodiment, the cooling fluid is cold air. Optionally, other gaseous or liquid cooling media are used as the cooling fluid. For instance, dry ice (CO₂) and water mist are two alternate cooling fluids. Further, the cooling rate achieved by the source of external cooling 310 depends upon the flow rate and/or flow volume of the cooling fluid, the interacting time of the cooling fluid with the heated material, and the temperature of the cooling fluid. As discussed in some of the examples below, the interacting time of the cooling fluid may be increased by employing multiple conduits for providing the cooling fluid and properly arranging the spacing between the conduits.

Figure 3 shows the source of external cooling 310 disposed along the same side of the sheet metal component 100 as the laser beam source 304, that is to say, along the heating side of the sheet metal component. Alternatively, the source of external cooling 310 is disposed for directing a flow of the cooling fluid toward the material along the side of the sheet metal component 100 that is opposite the heating side. Further alternatively, separate flows of cooling fluid are directed toward both the heating side and the reverse side of the sheet metal component 100.

Optionally, the laser-beam heat-treatment process is performed on a single sheet metal part, on a sub-assembly of parts, or on a complete assembly of parts. Advantageously, the laser beam 306 can be directed toward any predetermined location of a part or sub-assembly to create a local strengthening, even at locations that otherwise are difficult to access.

Although the example that is shown in Figure 3 illustrates a flat sheet metal component 100, it is to be understood that the process is equally applicable to tubular or other closed-profile structures, in particular hydroformed tubular parts. Analogously as described heretofore, laser beam 306 is used to provide local heating to a predetermined area of the tubular part within which the mechanical properties are to be improved, followed by rapid cooling/quenching of the heated area to cause a phase transformation from a mainly austenitic microstructure to a mainly martensitic and/or bainitic microstructure.

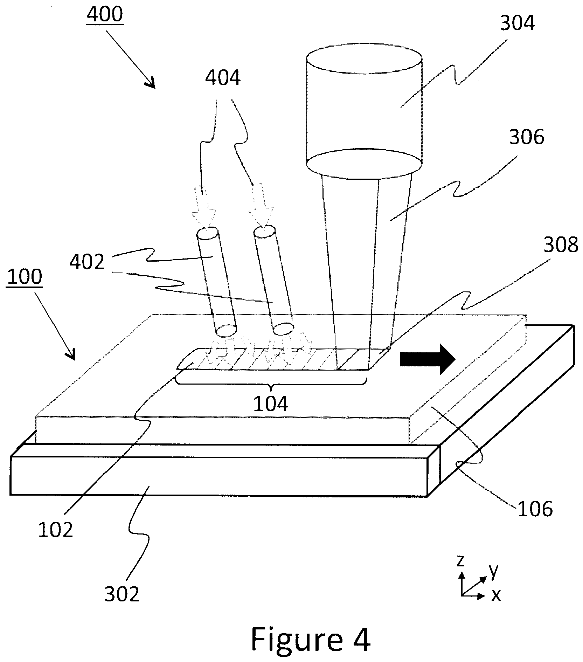

Referring now to Figure 4, shown is a simplified perspective view illustrating yet another system 400 for performing localized heat treatment of a steel sheet component 100 according to an embodiment of the instant invention. For clarity, components of the system 400 that are not essential to achieving an understanding of the invention have been omitted from this discussion. Accordingly, components such as for instance laser beam generation units, laser delivery optics, drive mechanisms and flow-control systems for cooling fluids etc. are not shown in Figure 4. Further, in the interest of clarity the steel sheet component 100 is illustrated as a flat, rectangular sheet 106. It is to be understood that in practice the steel sheet component 100 may have a complex, three-dimensional shape. For instance, the steel sheet component 100 may be a B-column for an automobile, etc.

Referring still to Figure 4, the system 400 includes a support structure 202 for holding the steel sheet component 100 during localized heat treatment thereof. A laser beam shaping optic 304 is used to represent a laser source for providing a laser beam 306 and for projecting the laser beam 306 onto the predetermined portion 104 of the steel sheet component 100, thereby producing heating spot 308. In the specific example that is shown in Figure 4 the laser beam 306 is square in cross-section and produces a square heating spot 308. The support structure 202 is relatively moveable to the laser beam source 304 for scanning the laser beam 306 across the predetermined portion 104 of the steel sheet component 100. In particular, the laser beam 306 is scanned along a scan direction as indicated using the block arrow in Figure 4, such that the heating spot 308 heats the material within the predetermined portion 104 of the steel sheet component 100. Optionally, the laser beam 306 is stationary and the support structure 202 is moved in a direction opposite the scan direction, or the support structure 202 is stationary and the laser beam 306 is moved in the scan direction. Alternatively, both the laser beam 306 and the support structure 202 are moved. In an embodiment, the laser beam 306 is movable in one of the x-direction and the y-direction, and the support structure 202 is movable in the other one of the x-direction and the y-direction, thereby supporting the formation of curved-strips or other shapes of laser-beam heat-treated material. Alternatively, the laser beam 306 or the support structure is movable in the x-direction and in the y-direction.

During operation, the heating spot 308 heats the material within the predetermined portion 104 to a temperature of austenitizing transformation. For instance, the material within the predetermined portion 104 is heated to between about 800°C and about 950°C. The material of the steel sheet component 100, both within and adjacent to the predetermined portion 104, is insufficiently thick to support self-quenching of the laser-beam heated material. That is to say, the rate of cooling of the material after the heating spot 308 heats it is not sufficiently fast to transform a mainly austenitic microstructure of the material to a mainly bainitic and/or martensitic microstructure. Accordingly, the system 400 includes a source of external cooling 402. In the example that is shown in Figure 4, the source of external cooling 402 is a plurality of conduits for directing a flow 404 of a cooling fluid toward the material within the predetermined portion 104 and immediately behind the laser beam 306 along the scan direction of the laser beam 306. The source of external cooling 402 provides the flow 404 of the cooling fluid during scanning of the laser beam 306 across the predetermined portion 102. That is to say, the cooling fluid is directed toward a point that trails the heating spot 308.

The source of external cooling 402 is selected and adjusted to cool the material at a sufficiently rapid rate to form a locally hardened region substantially within the predetermined portion 104. In particular, the source of external cooling 402 is selected to cool the material at a rate that is sufficiently fast to transform a mainly austenitic microstructure of the material to a mainly bainitic and/or martensitic microstructure. Cooling the material in this way achieves predetermined mechanical properties, such as high strength and tough microstructure. Adjusting the source of external cooling 402 includes, for instance, varying the distance between the heating spot 308 and the source of external cooling 402. Said distance may be determined to achieve optimal cooling behavior. Alternatively, the cooling fluid itself is selected to achieve optimal cooling behavior for a particular application. According to an embodiment, the cooling fluid is cold air. Optionally, other gaseous or liquid cooling media are used as the cooling fluid. For instance, dry ice (CO₂) and water mist are two alternate cooling fluids. Further, the cooling rate achieved by the source of external cooling 402 depends upon the flow rate and/or flow volume of the cooling fluid, the interacting time of the cooling fluid with the heated material, and the temperature of the cooling fluid. In the instant example, the interacting time of the cooling fluid is increased relative to the systems 200 and 300 by employing a plurality of conduits for providing the cooling fluid and properly arranging the spacing between the conduits. Two separate conduits are shown in Figure 4, but it is to be understood that more than two separate conduits may be employed.

Figure 4 shows the source of external cooling 402 disposed along the same side of the sheet metal component 100 as the laser beam source 304, that is to say, along the heating side of the sheet metal component. Alternatively, the source of external cooling 302 is disposed for directing a flow of the cooling fluid toward the material along the side of the sheet metal component 100 that is opposite the heating side. Further alternatively, separate flows of cooling fluid are directed toward both the heating side and the reverse side of the sheet metal component 100.

Optionally, the laser-beam heat-treatment process is performed on a single sheet metal part, on a sub-assembly of parts, or on a complete assembly of parts. Advantageously, the laser beam 306 can be directed toward any predetermined location of a part or sub-assembly to create a local strengthening, even at locations that otherwise are difficult to access.

Although the example that is shown in Figure 4 illustrates a flat sheet metal component 100, it is to be understood that the process is equally applicable to tubular or other closed-profile structures, in particular hydroformed tubular parts. Analogously as described heretofore, laser beam 306 is used to provide local heating to a predetermined area of the tubular part within which the mechanical properties are to be improved, followed by rapid cooling/quenching of the heated area to cause a phase transformation from a mainly austenitic microstructure to a mainly martensitic and/or bainitic microstructure.

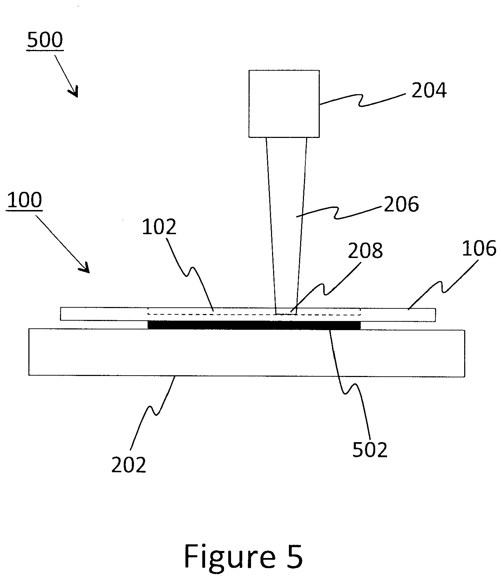

Referring now to Figure 5, shown is a simplified side view illustrating yet another system 500 for performing localized heat treatment of a steel sheet component 100 according to an embodiment of the instant invention. For clarity, components of the system 500 that are not essential to achieving an understanding of the invention have been omitted from this discussion. Accordingly, components such as for instance laser power sources, laser optics, drive mechanisms and heat sink cooling features etc. are not shown in Figure 5. Further, in the interest of clarity the steel sheet component 100 is illustrated as a flat, rectangular sheet 106. It is to be understood that in practice the steel sheet component 100 may have a complex, three-dimensional shape. For instance, the steel sheet component 100 may be a B-column for an automobile, etc.

Referring still to Figure 5, the system 500 includes a support structure 202 for holding the steel sheet component 100 during localized heat treatment thereof. A laser beam source 204 is provided for generating a laser beam 206 and for projecting the laser beam 206 onto the predetermined portion (indicated using dashed lines) of the steel sheet component 100, thereby producing heating spot 208. In the specific example that is shown in Figure 5 the laser beam 206 is circular in cross-section and produces a circular heating spot 208. The support structure 202 is relatively moveable to the laser beam 206, for scanning the laser beam 206 across the predetermined portion 104 of the steel sheet component 100. In particular, the laser beam 206 is scanned along a scan direction as indicated using the block arrow in Figure 5, such that the heating spot 208 heats the material within the predetermined portion 104 of the steel sheet component 100. Optionally, the laser beam source 204 is stationary and the support structure 202 is moved in a direction opposite the scan direction, or the support structure 202 is stationary and the laser beam source 204 is moved in the scan direction. Alternatively, both the laser beam source 204 and the support structure 202 are moved. In an embodiment, the laser beam source 204 is movable in one of the x-direction (left-to-right in Figure 5) and the y-direction (in-and-out of the plane of the page in Figure 5), and the support structure 202 is movable in the other one of the x-direction and the y-direction, thereby supporting the formation of curved-strips or other shapes of laser-beam heat-treated material. Alternatively, the laser beam source 204 or the support structure 202 is movable in the x-direction and in the y-direction.

During operation, the heating spot 208 heats the material within the predetermined portion 104 to a temperature of austenitizing transformation. For instance, the material within the predetermined portion 104 is heated to between about 800°C and about 950°C. The material of the steel sheet component 100, both within and adjacent to the predetermined portion 104, is insufficiently thick to support self-quenching of the laser-beam heated material. That is to say, the rate of cooling of the material after the heating spot 208 heats it is not sufficiently fast to transform a mainly austenitic microstructure of the material to a mainly bainitic and/or martensitic microstructure. Accordingly, the system 500 includes a source of external cooling. In the example that is shown in Figure 5, the source of external cooling is a heat sink member 502 that is provided in thermal communication with the steel sheet component 100 along a side thereof that is opposite the side heated by the laser beam 206. The heat sink member 502 is also aligned with the predetermined portion 104, and has a width that is chosen to be proportional to an expected heat affected zone based upon the heat-treatment process. By way of a specific example, the heat sink member 502 is a fitted contact metallic heat sink, fabricated from steel and/or copper or another suitable material. For instance, the heat sink member 502 is fabricated using an ultra conductive copper alloy, which is soft, flexible and can be easily bent to follow the shape of the laser heat-treated predetermined portion 104. Optionally, the support structure 202 and/or another fixturing device is provided adjacent to the heat sink member 502. Optionally, supplemental cooling using one of the external cooling sources 210, 310 or 402 is provided.

The heat sink member 502 cools the heated material within the predetermined portion 104 at a rate that is sufficiently fast to transform a mainly austenitic microstructure of the material to a mainly bainitic and/or martensitic microstructure. Cooling the material in this way achieves predetermined mechanical properties, such as high strength and tough microstructure. Optionally, the laser-beam heat-treatment process is performed on a single sheet metal part, on a sub-assembly of parts, or on a complete assembly of parts. Advantageously, the laser beam 206 can be directed toward any predetermined location of a part or sub-assembly to create a local strengthening, even at locations that otherwise are difficult to access.

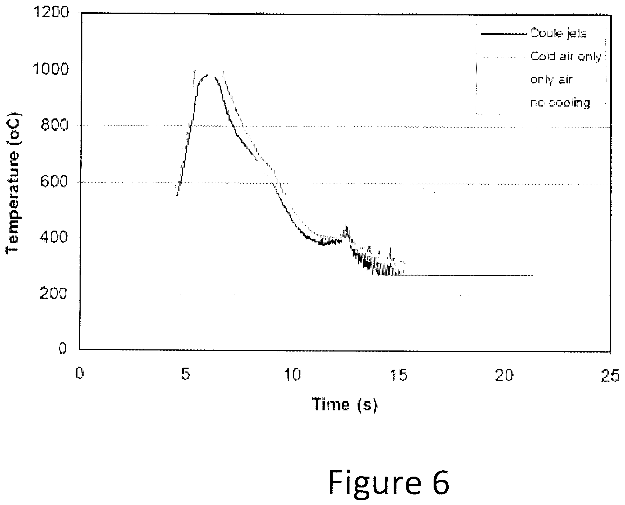

Figure 6 shows a graphic representation of the temperature measured by a pyrometer at a fixed location within a laser beam scan path during localized heat-treatment of steel sheet components with different cooling mechanisms. The pyrometer is capable only of measuring temperatures in the range of 270°C to 960°C. In general, it is believed that a cooling rate of about 50°C per second produces a significant amount of bainite and martensite volume in a steel alloy, resulting in acceptable hardening and/or strengthening of the laser-beam heat-treated material. The graphs that are presented in Figure 6 show that a cooling rate of about 50°C per second is achievable with the use of a cooling air jet. Further, it is clearly shown in Figure 6 that the cooling rate when no source of external cooling is used is not sufficiently rapid to achieve the desired formation of bainite and martensite.

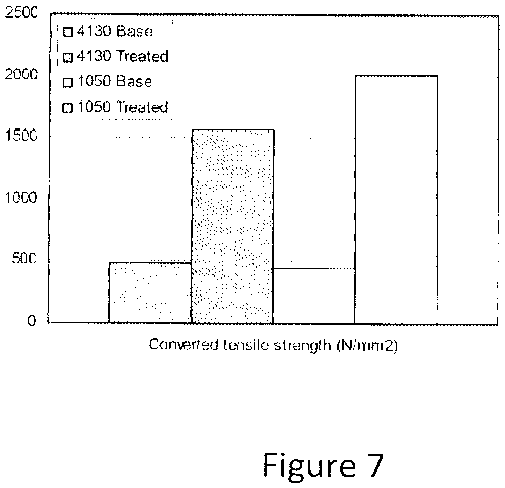

Figure 7 shows a graphic representation of the strength enhancement that was observed in steel sheet components subsequent to localized heat-treatment. The tensile strength of the 4130 alloy increased from about 500 N/mm² before heat treatment to more than 1500 N/mm² after heat treatment. Similarly, the tensile strength of the 1050 alloy increased from about 500 N/mm² before heat treatment to more than 2000 N/mm² after heat treatment.

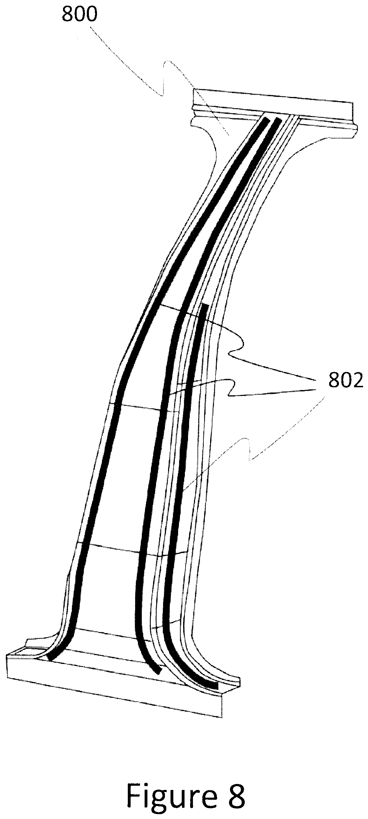

Referring now to Figure 8 shows an exemplary representation illustrating a part 800 with laser beam heat-treated strips 802 for increasing the strength of the part. In the example that is shown in Figure 8, the part 800 is a B-column for an automobile and the laser beam heat-treated strips 802 extend generally along at least a portion of the length of the B-column. As shown in Figure 8, the laser beam heat-treated strips 802 curve and follow the shape of the part.

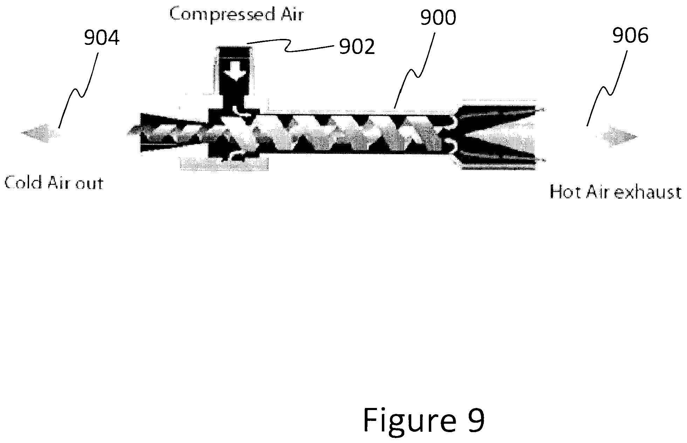

Figure 9 shows a schematic representation of a vortex tube using compressed air for generating a cold air stream for beam-spot cooling. In particular, the vortex tube 900 may be used as the source of external cooling 210, 310 or 402 as described above with reference to Figures 2, 3 and 4, respectively. For instance, the vortex tube 900 functions as a conduit that uses compressed air as a power source, without requiring any moving parts inside of the device. Compressed air 902 that is provided to the vortex tube 900 is separated into two streams of air inside the tube. Through energy exchange between the two air streams by means of the principle of conservation of angular momentum, one stream becomes a cold stream 904 that is directed toward the predetermined portion 104 of the sheet steel component 100. The other stream 906 is exhausted away from the sheet steel component. The vortex tube 900 is capable of lowering air temperature up to 46°C or greater, and as such is well suited for cooling the material within the predetermined portion 104 after it is heated by the heating spot of the laser beam.

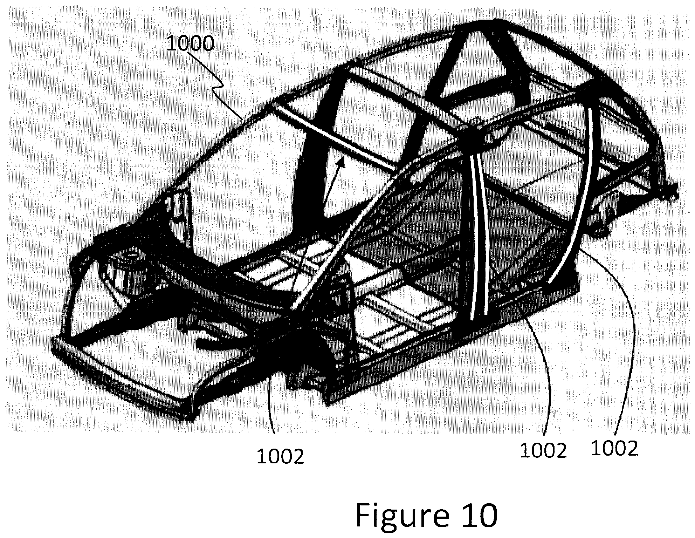

Figure 10 shows a schematic representation of an automotive frame 1000 including components that have been subjected to a localized laser-beam heat-treatment process as described above. In particular, Figure 10 illustrates how areas of localized laser heat-treatment (white lines 1002) can be applied to a body structure of an automotive component to provide local enhancement of mechanical properties in predetermined areas of the automotive component. Of course, the localized laser heat treatment may also be applied to other automotive components, as well as other non-automotive components.

In the examples that are described with reference to Figures 1 through 4, the laser beam heat-treated material 102 extends linearly and defines a narrow strip. Alternatively, different sized laser beam spot-sizes may be used to produce strips of laser beam heat-treated material having different widths. For instance, a strip of 12 mm in width has been produced using an available 16 mm x 16 mm square laser beam spot. Notably, phase transformation was achieved throughout the thickness of the laser beam heat-treated material in the 12 mm wide strip, and experimental determinations indicated that the strength of this strip increased significantly after localized laser-beam heat treatment.

The embodiments of the invention as described above provide a process and system for the local strengthening of sheet metal components by local heating using a laser-beam, followed by rapid cooling using a source of external cooling. In the case of sheet metal components, the heating effect of the laser-beam extends substantially through the entire thickness of the sheet metal component and hence the sheet metal component is not subject to self-quenching as is the case for bulk metal components. The active cooling step that is performed using the source of external cooling provides a product with a locally hardened region, which extends substantially through the entire thickness of the sheet metal component as opposed to only a hardened top layer that is formed in bulk metal components.

While the above description constitutes a plurality of embodiments of the present invention, it will be appreciated that the present invention is susceptible to further modification and change without departing from the fair meaning of the accompanying claims.

## Claims

1. A process for the localized heat treatment of a steel sheet component formed of a hardenable ferrous alloy, comprising:
providing the steel sheet component;
projecting a laser beam onto the steel sheet component;
providing relative movement between the laser beam and the steel sheet component for scanning a laser beam across a predetermined portion of the steel sheet component along a scan direction, the laser beam having a power selected to heat material within the predetermined portion to a temperature of austenitizing transformation between 800 °C and 950 °C;
during scanning the laser beam across the predetermined portion, applying a source of external cooling to the material within the predetermined portion and immediately behind the laser beam along the scan direction of the laser beam, comprising using a cooling air jet generated by a vortex tube to achieve a rate of cooling of about 50 °C per second, so as to form a locally hardened region defined substantially within the predetermined portion; and
subsequent to applying the source of external cooling, allowing the material within the predetermined portion of the steel sheet component to cool to ambient temperature.

2. The process of claim 1 wherein the material within the predetermined portion of the steel sheet component has a thickness, and wherein the thickness of the material is other than sufficient to support self-quenching of the heated material within the predetermined portion.

3. The process of claim 1 or 2 wherein the rate of cooling is sufficiently rapid to transform a mainly austenitic microstructure of the material to a mainly at least one of bainitic microstructure and martensitic microstructure.

4. The process of any one of claims 1 to 3 wherein
scanning the laser beam other than forms a weld seam between the steel sheet component and another steel sheet component.

5. The process of any one of claims 1 to 4 wherein scanning the laser beam across the predetermined portion of the steel sheet component causes heating through the entire thickness of the material.

6. The process of any one of claims 1 to 5 wherein applying the source of external cooling comprises directing a cooling fluid toward the material within the predetermined portion and immediately behind the laser beam along the scan direction of the laser beam.

7. The process of any one of claims 1 to 5 wherein the laser beam impinges upon a surface along a first side of the steel sheet component and wherein applying the source of external cooling further comprises providing a heat-sink material in thermal communication with a surface along a second side of the steel sheet component that is opposite the first side.

8. The process of any one of claims 1 to 7 wherein the source of external cooling is applied to the material within the predetermined portion prior to the material cooling below either the bainitic start temperature or the martensitic start temperature of the ferrous alloy.

9. A system for performing localized heat treatment of a steel sheet component formed of a hardenable ferrous alloy, comprising:
a support structure for holding the steel sheet component during the localized heat treatment thereof;
a laser source for generating a laser beam, the laser source being movable relative to the support structure for scanning the generated laser beam across a predetermined portion of the steel sheet component, the laser source having an output power that is sufficient to form a heating spot capable of heating material within the predetermined portion to a temperature of austenitizing transformation between 800 °C and 950 °C; and
a source of external cooling comprising a vortex tube arranged for generating, during use, a cold air stream for cooling material within the predetermined portion and immediately behind the heating spot produced by the laser beam along a scan direction of the laser beam with a rate of cooling of about 50 °C per second.

10. The system of claim 9 wherein the source of external cooling is disposed adjacent to the laser beam source and movable with the laser beam source, relative to the support structure.

11. The system of claim 9 wherein the support structure holds the steel sheet component such that the laser beam impinges upon a surface along a first side of the steel sheet component and wherein the source of external cooling further comprises a heat-sink material in thermal communication with a surface along a second side of the steel sheet component that is opposite the first side.

12. The system of claim 11 wherein the heat-sink material is an ultra-conductive copper alloy.

13. The system of claim 12 wherein a width of the heat-sink material is proportional to an expected heat affected zone based on the localized heat treatment.

## Patentansprüche

1. Verfahren zur lokalen Wärmebehandlung eines aus einer härtbaren Eisenlegierung gebildeten Stahlblechteils, umfassend:
Bereitstellung des Stahlblechteils,
Projizieren eines Laserstrahls auf das Stahlblechteil,
Vorsehen einer Relativbewegung zwischen dem Laserstrahl und dem Stahlblechteil zum Scannen eines Laserstrahls über einen vorbestimmten Abschnitt des Stahlblechteils entlang einer Scanrichtung, wobei der Laserstrahl eine Leistung aufweist, die so gewählt ist, dass das Material innerhalb des vorbestimmten Abschnitts auf eine Austenitisierungstemperatur zwischen 800 °C und 950 °C erhitzt wird,
während des Scannens des Laserstrahls über den vorbestimmten Abschnitt, Anwenden einer externen Kühlquelle auf das Material innerhalb des vorbestimmten Abschnitts und unmittelbar hinter dem Laserstrahl entlang der Scanrichtung des Laserstrahls, umfassend die Verwendung eines Kühlluftstrahls, der durch ein Wirbelrohr erzeugt wird, um eine Abkühlungsrate von etwa 50 °C pro Sekunde zu erreichen, um einen lokal gehärteten Bereich zu bilden, der im Wesentlichen innerhalb des vorbestimmten Abschnitts definiert ist, und
nach dem Anwenden der externen Kühlquelle das Material innerhalb des vorbestimmten Teils des Stahlblechteils auf Umgebungstemperatur abkühlen zu lassen.

2. Verfahren nach Anspruch 1, bei dem das Material innerhalb des vorbestimmten Abschnitts des Stahlblechteils eine Dicke aufweist, und bei dem die Dicke des Materials nicht ausreicht, um das Selbstabschrecken des erhitzten Materials innerhalb des vorbestimmten Abschnitts zu unterstützen.

3. Verfahren nach Anspruch 1 oder 2, bei dem die Abkühlungsgeschwindigkeit ausreichend schnell ist, um ein hauptsächlich austenitisches Gefüge des Materials in ein hauptsächlich bainitisches Gefüge und/oder ein martensitisches Gefüge umzuwandeln.

4. Verfahren nach einem der Ansprüche 1 bis 3, bei dem das Scannen des Laserstrahls keine Schweißnaht zwischen dem Stahlblechteil und einem anderen Stahlblechteil bildet.

5. Verfahren nach einem der Ansprüche 1 bis 4, bei dem das Scannen des Laserstrahls über den vorbestimmten Abschnitt des Stahlblechteils eine Erwärmung über die gesamte Dicke des Materials bewirkt.

6. Verfahren nach einem der Ansprüche 1 bis 5, bei dem die Anwendung der externen Kühlquelle darin besteht, dass eine Kühlflüssigkeit auf das Material innerhalb des vorbestimmten Abschnitts und unmittelbar hinter dem Laserstrahl entlang der Scanrichtung des Laserstrahls gerichtet wird.

7. Verfahren nach einem der Ansprüche 1 bis 5, bei dem der Laserstrahl auf eine Oberfläche entlang einer ersten Seite des Stahlblechteils auftrifft und bei dem das Anlegen der externen Kühlquelle ferner das Bereitstellen eines Wärmesenkenmaterials in thermischer Verbindung mit einer Oberfläche entlang einer zweiten Seite des Stahlblechteils, die der ersten Seite gegenüberliegt, umfasst.

8. Verfahren nach einem der Ansprüche 1 bis 7, bei dem die externe Kühlquelle auf das Material innerhalb des vorbestimmten Abschnitts angewendet wird, bevor das Material entweder unter die bainitische Starttemperatur oder die martensitische Starttemperatur der Eisenlegierung abkühlt.

9. System zur Durchführung einer örtlichen Wärmebehandlung eines aus einer härtbaren Eisenlegierung gebildeten Stahlblechteils, umfassend:
eine Stützstruktur zum Halten des Stahlblechteils während seiner lokalen Wärmebehandlung,
eine Laserstrahlquelle zum Erzeugen eines Laserstrahls, wobei die Laserstrahlquelle relativ zu der Trägerstruktur beweglich ist, um den erzeugten Laserstrahl über einen vorbestimmten Abschnitt der Stahlblechkomponente zu scannen, wobei die Laserstrahlquelle eine Ausgangsleistung hat, die ausreicht, um einen Heizfleck zu bilden, der in der Lage ist, Material innerhalb des vorbestimmten Abschnitts auf eine Austenitisierungstemperatur zwischen 800 °C und 950 °C zu erhitzen, und
eine externe Kühlquelle, die ein Wirbelrohr umfasst, das so angeordnet ist, dass es während der Verwendung einen kalten Luftstrom zum Kühlen von Material innerhalb des vorbestimmten Abschnitts und unmittelbar hinter dem durch den Laserstrahl erzeugten Heizfleck entlang einer Scanrichtung des Laserstrahls mit einer Kühlrate von etwa 50 °C pro Sekunde erzeugt.

10. System nach Anspruch 9, bei dem die externe Kühlquelle neben der Laserstrahlquelle angeordnet und mit der Laserstrahlquelle relativ zu der Trägerstruktur beweglich ist.

11. System nach Anspruch 9, bei dem die Stützstruktur das Stahlblechteil so hält, dass der Laserstrahl auf eine Oberfläche entlang einer ersten Seite des Stahlblechteils auftrifft, und bei dem die externe Kühlquelle ferner ein Wärmesenkenmaterial in thermischer Verbindung mit einer Oberfläche entlang einer zweiten Seite des Stahlblechteils umfasst, die der ersten Seite gegenüberliegt.

12. System nach Anspruch 11, wobei das Wärmesenkenmaterial eine ultraleitfähige Kupferlegierung ist.

13. System nach Anspruch 12, bei dem eine Breite des Wärmesenkenmaterials proportional zu einer erwarteten wärmebeeinflussten Zone auf der Grundlage der lokalisierten Wärmebehandlung ist.

## Revendications

1. Procédé pour le traitement thermique localisé d'un composant de tôle en acier formé d'un alliage ferreux durcissable, comprenant les étapes consistant à :
fournir le composant de tôle en acier ;
projeter un faisceau laser sur le composant de tôle en acier ;
assurer un déplacement relatif entre le faisceau laser et le composant de tôle en acier pour scanner un faisceau laser à travers une portion prédéterminée du composant de tôle en acier long d'une direction de balayage, le faisceau laser ayant une puissance sélectionnée pour chauffer un matériau à l'intérieur de la portion prédéterminée à une température de transformation par austénitisation entre 800 °C et 950 °C ;
pendant le balayage du faisceau laser à travers la portion prédéterminée, appliquer une source de refroidissement externe sur le matériau à l'intérieur de la portion prédéterminée et immédiatement derrière le faisceau de laser le long de la direction de balayage du faisceau laser, l'étape comprenant d'utiliser un jet d'air de refroidissement généré par un tube vortex pour obtenir un taux de refroidissement d'environ 50 °C par seconde, de manière à former une région localement durcie définie sensiblement à l'intérieur de la portion prédéterminée ; et
consécutivement à l'application de la source de refroidissement externe, permettre au matériau à l'intérieur de la portion prédéterminée du composant de tôle en acier de refroidir à température ambiante.

2. Procédé selon la revendication 1, dans lequel le matériau à l'intérieur de la portion prédéterminée du composant de tôle en acier a une épaisseur, et dans lequel l'épaisseur du matériau n'est pas suffisante pour supporter une trempe automatique du matériau chauffé à l'intérieur de la portion prédéterminée.

3. Procédé selon la revendication 1 ou 2, dans lequel le taux de refroidissement est suffisamment rapide pour transformer une structure principalement austénique du matériau en au moins une microstructure parmi une microstructure principalement baitinique et une microstructure principalement martensitique.

4. Procédé selon l'une quelconque des revendications 1 à 3, dans lequel l'étape consistant à balayer le faisceau laser ne forme pas de cordon de soudure entre le composant de tôle en acier et un autre composant de tôle en acier.

5. Procédé selon l'une quelconque des revendications 1 à 4, dans lequel l'étape consistant à balayer le faisceau laser à travers la portion prédéterminée du composant de tôle en acier provoque une chauffe à travers l'épaisseur entière du matériau.

6. Procédé selon l'une quelconque des revendications 1 à 5, dans lequel l'étape consistant à appliquer la source de refroidissement externe comprend de diriger un fluide de refroidissement vers le matériau à l'intérieur de la portion prédéterminée et immédiatement derrière le faisceau laser le long de la direction de scannage du faisceau laser.

7. Procédé selon l'une quelconque des revendications 1 à 5, dans lequel le faisceau laser empiète sur une surface le long du premier côté du composant de tôle en acier et dans lequel l'étape consistant à appliquer la source de refroidissement externe comprend en outre de fournir un matériau de dissipation de chaleur en communication thermique avec une surface le long d'un second côté du composant de tôle en acier qui est opposé au premier côté.

8. Procédé selon l'une quelconque des revendications 1 à 7, dans lequel la source de refroidissement externe est appliquée sur le matériau à l'intérieur de la portion prédéterminée avant le refroidissement de matériaux soit en dessous de la température de démarrage baitinique, soit en dessous de la température de démarrage martensitique de l'alliage ferreux.

9. Système pour effectuer un traitement thermique localisé d'un composant de tôle en acier formé d'un alliage ferreux durcissable, comprenant :
structure de support destiné à maintenir le composant de tôle en acier durant le traitement thermique localisé de celui-ci ;
une source laser destinée à générer un faisceau laser, la source laser étend déplaçable relativement à la structure de support pour balayer le faisceau laser généré à travers une portion prédéterminée du composant de tôle en acier, la source laser ayant une puissance de sortie que suffisante pour former un point de chauffe capable de chauffer un matériau à l'intérieur de la portion prédéterminée à une température de transformation d'austénitisation entre 800 °C et 950 °C ; et
une source de refroidissement externe comprenant un tube vortex agencé pour générer, durant l'utilisation, un courant d'air froid pour refroidir matériau à l'intérieur de la portion prédéterminée et immédiatement derrière le point de chauffe produit par le faisceau laser le long d'une direction de balayage du faisceau laser avec un taux de refroidissement d'environ 50 °C par seconde.

10. Système selon la revendication 9, dans lequel la source de refroidissement externe est disposée de manière adjacente à la source de faisceau laser et est déplaçable avec la source de faisceau laser relativement à la structure de support.

11. Système selon la revendication 9, dans lequel la structure de support maintien le composant de tôle en acier de telle sorte que le faisceau laser empiète sur une surface le long d'un premier côté du composant de tôle en acier et dans lequel la source de refroidissement externe comprend en outre un matériau de dissipation de chaleur en communication thermique avec une surface long d'un second côté du composant de tôle en acier qui est opposé au premiercôté.

12. Système selon la revendication 11, dans lequel le matériau de dissipation de chaleur est un alliage de cuivre supraconducteur.

13. Système selon la revendication 12, dans lequel une largeur du matériau de dissipation de chaleur est proportionnelle à une zone thermiquement affectée attendue sur la base du traitement thermique localisé.
